# EUROPÄISCHE PATENTSCHRIFT

(11) **EP 0 930 123 B1**
(45) Veröffentlichungstag und Bekanntmachung des Hinweises auf die Patenterteilung: **28.07.2004**
(21) Anmeldenummer: 98123800.9
(22) Anmeldetag: 15.12.1998
(51) Int. Cl.: B23K 1/00

(54) **Verfahren zum Löten von metallischen mikrostrukturierten Blechen**
Brazing method of microstructured metallic sheets
Méthode de brasage de tôles métalliques comprenant des microstructures

(30) Priorität: 16.01.1998 DE 19801374
(43) Veröffentlichungstag der Anmeldung: 21.07.1999
(73) Patentinhaber: Ballard Power Systems AG, 73230 Kirchheim / Teck-Nabern (DE)
(72) Erfinder: Benz, Uwe, 88690 Uhldingen-Mühlhof (DE); Haug, Lothar, 73730 Esslingen (DE); Kleinekathöfer, Wolfgang Dr., 73550 Waldstetten (DE); Waitkat, Peter, 78579 Neuhausen (DE)
(74) Vertreter: Beyer, Andreas, Dr.

(56) Entgegenhaltungen:
- DE-A- 3 926 466
- DE-A- 19 708 472
- DR.-ING. F.PETTER, FRANKFURT/MAIN: "Vakkumgelötete Wärmetauscher für Lebenserhaltungssysteme in der Raumfahrt." SCHWEISSEN UND SCHNEIDEN, Bd. 45, Nr. 8, August 1993 (1993-08), Seiten 427-429, XP000394008 Dusseldorf ( DE )
- HARTIG A. UND PETER F.: 'Hochtemperaturlöten von Lamellenwärmetäuschern. DVS Bericht 69', 1981, DVS VERLAG, DÜSSELDORF Seiten 55 - 61

## Beschreibung

Die Erfindung betrifft ein Verfahren zum Löten von mikrostrukturierten, metallischen Blechen zu einer kompakten Einheit, z.B. einem Mikrowärmeübertrager oder Mikroreaktoren

Mikrowärmeübertrager oder Mikroreaktoren bestehen aus einzelnen, dünnen, fein strukturierten, metallischen Blechen. Die Strukturierung der Bleche dient zur Bildung feiner Strömungskanäle für die beteiligten Medien. Die Bleche werden übereinander gestapelt und mit Grund- und Deckplatten versehen, so daß ein kompaktes Bautteil entsteht. Mikrowärmeübertrager oder Mikroreaktoren ermöglichen aufgrund ihrer feinen Strukturen auf kleinstem Raum ein Maximum an Wärme- bzw. Leistungsübertragung zwischen zwei oder mehreren Medien. Die wichtigsten Anforderungen an das Bauteil, sowohl hinsichtlich des verwendeten Folienmaterials als auch hinsichtlich der Fügetechnik sind:
- ausreichende Dichtigkeit (He-Lecktest: 1 x 10⁻⁶ mbar I/s) sowohl zwischen den Passagen zur sicheren Trennung der verwendeten Medien voneinander als auch zur Umgebung
- ausreichende Festigkeit
- stoffschlüssige Verbindung auch über den gesamten strukturierten Bereich
- Korrosionsresistenz gegenüber den einzusetzenden Medien
- Temperaturbeständigkeit bis 450°C.

Herkömmliche Fügeverfahren wie z.B. Schmelzschweißen, Diffusionsschweißen, Kleben, können nach heutigem Wissensstand nicht alle Anforderungen an einen gesamten Blechverbund erfüllen.

Das Schmelzschweißen ist bei einer Vielzahl von nacheinander zu fügenden Blechen, gerade im Bereich der zu verbindenden Strukturen, nicht anwendbar und noch dazu sehr zeit- und kostenintensiv. Außerdem ist bei jedem Schweißvorgang der sehr dünnen Metallbleche ein Materialverzug zu erwarten, der sich über den gesamten Blechstapel addiert.

Das Diffusionsschweißen erfordert eine sehr hohe Oberflächenqualität hinsichtlich Rauheit, Reinheit und Formgenauigkeit der Metallbleche, die nur mit sehr großem Aufwand, falls überhaupt, zu erreichen ist.

Eine Klebeverbindung erfüllt die Anforderung von 450°C Temperaturbeständigkeit nicht und ist damit ungeeignet.

Als thermisches Fügeverfahren für metallische Bleche ist außerdem das Löten in Inert-Atmosphäre oder im Vakuum bekannt. Dabei muß eine bestimmte Menge an geeignetem Lot in der Fügeebene vorhanden sein. Üblicherweise, also bei der Fertigung herkömmlicher Wärmeübertrager und Reaktoren mit großen Kanalgeometrien (> 1,0 mm), weisen die Lotwerkstoffe bei diesem Verfahren Foliendicken oder Pulverpartikelabmessungen auf, die wesentlich größer als 25 µm sind. Derartige Lotschichtdicken sind jedoch für das Fügen von sehr dünnen, fein strukturierten, metallischen Blechen ungeeignet. Es besteht die Gefahr, dass durch das überschüssige Lot diese feinen Strukturen teilweise oder ganz verschlossen werden und somit die gewünschte Strömungsführung des Mediums innerhalb des Bleches bzw. des Bauteiles behindert oder sogar verhindert werden kann.

Aus der DE 44 26 692 C1 sowie der WO 88106941 sind jeweils Mikrowärmeübertrager bekannt. Als Fügeverfahren für die mikrostrukturierten Bleche wird Löten angegeben.

In dem Artikel "Hochtemperaturlöten von Lamellenwärmetauschern" von A. Hartig und F. Petter, DVS-Bericht 69, S. 55-61, DVS-Verlag, Düsseldorf, 1981 ist die Herstellung von Lamellen- oder Plattenwärmetauschern durch Übereinanderstapeln und Verlöten von Abschluss- und Trennprofilen sowie ebenen Trennblechen beschrieben. Um das Lot an die Lötspalte zu bringen, werden die Trennbleche beidseitig mit Lot beschichtet und die lotbeschichteten Einzelteile dann zu einem Wärmetauscher-Core zusammengesetzt. Anschließend wird der Plattenstapel im Vakuum bei Temperaturen zwischen 1145°C und 1170°C verlötet.

Es ist Aufgabe der Erfindung, ein Verfahren zum Löten von metallischen, mikrostrukturierten Blechen anzugeben, mit dem eine stabile, den Anforderungen genügende Verbindung erreicht wird und gleichzeitig ein Schließen der Mikrostrukturen sicher verhindert wird.

Diese Aufgabe wird mit dem Verfahren nach Anspruch 1 gelöst. Vorteilhafte Ausführungen der Erfindung sind Gegenstand weiterer Ansprüche.

Durch die erfindungsgemäße Lotschichtdicke im Bereich zwischen 3 und 25 µm wird gewährleistet, daß die zur Verfügung stehende Lotmenge eine stabile, den Anforderungen genügende Verbindung ergibt und gleichzeitig die feinen Strukturen der Mikrostrukturierung nicht verschlossen werden.

Hinsichtlich der Art und Weise, wie die Lotschichten zwischen die Bleche des Stapels eingebracht werden, sind mehrere Ausführungen möglich. In einer ersten Ausführung werden die Bleche zuerst mit Lot beschichtet und anschließend die beschichteten Bleche übereinandergestapelt. Die einzelnen Verfahrensschritte sind folgendermaßen:
- Beschichten der Bleche mit Lot, wobei die Schichtdicke des Lots 3 bis 25 µm beträgt;
- Stapeln der mit Lot beschichteten Bleche;
- Verlöten des Stapels in Vakuum oder in Inertatmosphäre unter Wärmeeintrag.

Die Lotschicht kann z.B. in Form einer Folie, Paste oder eines Pulvers oder galvanisch auf die zu fügenden Bleche aufgebracht werden.

In einer alternativen Ausführung werden beim Stapeln der (unbeschichteten) Bleche abwechselnd Lotfolien zwischen die Bleche gelegt. Die einzelnen Verfahrensschritte sind:
- Stapeln der Bleche, wobei zwischen zwei Blechen jeweils eine Lotfolie gelegt wird, deren Schichtdicke 3 bis 25 µm beträgt;
- Verlöten des Stapels in Vakuum oder in Inertatmosphäre unter Wärmeeintrag.

Für sämtliche Ausführungen gilt, daß die Lotschichten vorteilhaft möglichst gleichmäßig, insbesondere mit konstanter Schichtdicke vorhanden sein sollten. Das Lot kann sowohl auf die strukturierten und/oder auf die nicht strukturierten Flächen der Bleche oder deren Teilbereiche aufgebracht werden.

Als Lot können z.B. folgende Materialien verwendet werden:
- Cu und Cu-Legierungen, insbesondere:
   CuPd Kupfer-Palladium-Legierung mit 10 bis 22 Gew.%, bevorzugt 15 bis 20 Gew.% Palladiumanteil
- Ni Legierungen, insbesondere:
   NiP Nickel-Phosphor-Legierung mit 7 bis 14 Gew.%, bevorzugt 9 bis 12 Gew.% Phosphoranteil
- Au und Au-Legierungen, insbesondere:
   AuNi Gold-Nickel-Legierung mit 10 bis 22 Gew.%, bevorzugt 15 bis 20 Gew.% Nickelanteil
- Ag und Ag-Legierungen, insbesondere:
   AgTi, Silber-Titan-Legierungen mit 2 bis 6 Gew.%, bevorzugt 3 bis 5 Gew.% Titananteil.

Die Abstände der zu fügenden Metalloberflächen sollten vorteilhaft im Bereich von einigen µm bis zu maximal 0,01 mm liegen, so daß sie durch das vorhandene Lot überbrückt werden können. Um diese Abstände zu erreichen, ist es erforderlich, während des Wärmeeintrags beim Löten einen entsprechenden Druck auf das zu lötende Bauteil auszuüben.

Unter Blechen im Sinne der Erfindung werden jede Art von metallischen Bauteilen z.B. in Form von ebenen, flachen Tafeln, Bändern oder Folien verstanden. Geeignete Materialien sind z.B.:
- Stähle (z.B. 1.4301, 1.4401, 1.4404, 1.4541, 1.4571),
- Ni, Ni-Legierungen
- Pd, Pd-Legierungen
- Cu, Cu-Legierungen.

Die Mikrostrukturierung der Bleche erfolgt durch an sich bekannte Verfahren, z.B. durch mikrostrukturtechnische Verfahren unter Verwendung hochpräziser Werkzeuge, durch Ätzen, Fräsen, Prägen, Stanzen oder Drahterodieren. Geeignet sind auch alle in den **DE 44 26 692 C1** und **WO 88/06941** beschriebenen Verfahren.

Um das Schließen, ganz oder teilweise, der für die Strömungsführung und Reaktionen vorgesehenen Kanäle der Mikrostruktur durch das überschüssige Lot zu verhindem, sind an den Blechen als zusätzliche Maßnahme Lotauffangkanäle vorgesehen. Die Abmessungen dieser Kanäle sollten hinsichtlich Breite und Tiefe insbesondere gleich oder größer gestaltet werden, als die der strömungsführenden Kanäle. Diese Lotauffangkanäle können insbesondere an solchen Bereichen der Mikrostruktur angeordnet werden, die hinsichtlich der Strömungsführung kritisch sind. Die Lotauffangkanäle füllen sich, wie beabsichtigt, mit dem überschüssigen Lot, so dass die strömungsführenden Kanäle frei und durchgängig bleiben.

Um in bestimmten Bereichen der Bleche ein Ausbreiten des Lotes zu verhindern, kann vorteilhaft ein Mittel eingesetzt werden, mit dem die Benetzung des Grundwerkstoffs mit dem Lot verhindert wird.

Das erfindungsgemäße Verfahren eignet sich z.B. für die Herstellung folgender Einheiten:
- Mikroreaktoren, Mikrowärmeübertrager;
- Hochleistungsverdampfer (Mikro-Plattenwärmetauscher), öl- oder katalytisch beheizt;
- Membranmodule zur H₂-Abtrennung.
Insbesondere können die vorgenannten Einheiten für Brennstoffzellensysteme mit integrierter Wasserstofferzeugung für mobile Anwendungen, z.B. an Bord eines Fahrzeugs eingesetzt werden.

Die Erfindung wird anhand von Ausführungsbeispielen unter Bezugnahme auf Zeichnungen näher beschrieben. Es zeigen:
- Fig. 1: drei Beispiele für die mögliche Strukturierung der Bleche;
- Fig. 2,3: Beispiele für den Ablauf des erfindungsgemäßen Verfahrens.

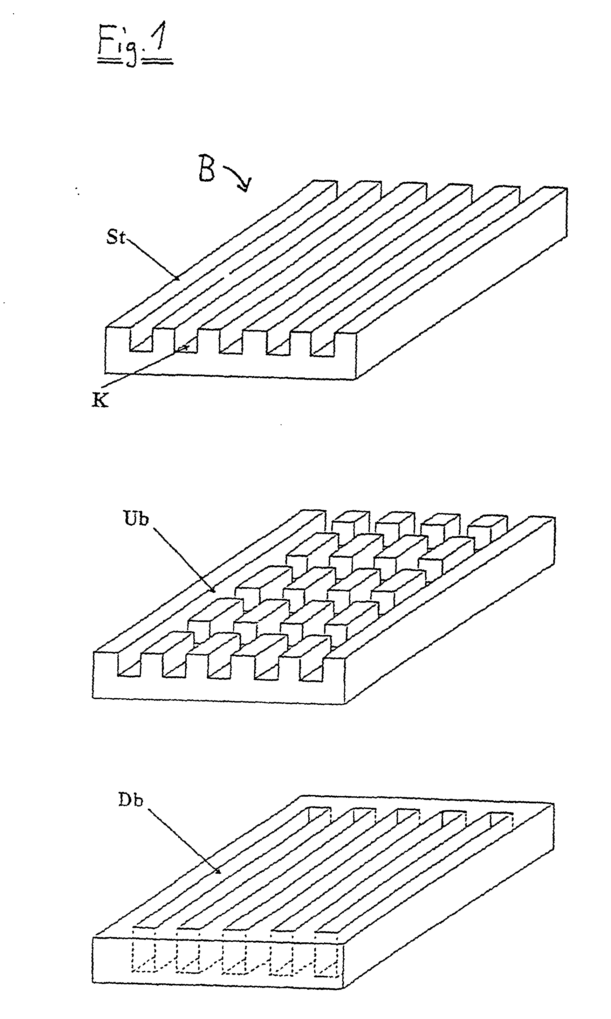

Fig. 1 zeigt drei Beispiele für die mögliche Mikrostrukturierung von Blechen **B,** wie sie in der vorliegenden Erfindung eingesetzt werden können. Die Dicke der Bleche liegt bevorzugt im Bereich 0,025 mm bis 10 mm. Die Kantenlängen der Bleche betragen in typischen Ausführungen bis zu 300 mm x 300 mm.

In der Ausführung a) weist das Blech **B** eine parallel verlaufende Kanalstruktur auf, wobei die einzelnen Kanäle **K** durch Stege **St** getrennt sind. Die Kanäle **K** sowie die Stege **St** weisen einen konstanten, rechteckförmigen Querschnitt auf.
In der Ausführung b) weisen die Stege in regelmäßigen Abständen Unterbrechungen **Ub** auf.
In der Ausführung c) weist das Blech **B** schlitzartige, parallele Durchbrechungen **Db** auf.
Neben den dargestellten Strukturierungen sind selbstverständlich beliebige andere Strukturierungen möglich.

Typische Abmessungen für die Strukturen (Kanäle und Stege) sind:

| | |
|---|---|
| Kanaltiefe | von 0,1 mm bis 0,4 mm und tiefer |
| Kanalbreite | von 0,1 mm bis 10 mm und breiter |
| Stegbreite | von 0,1 mm bis 10 mm und breiter |
| Steghöhe | von 0,1 mm bis 0,4 mm und höher. |

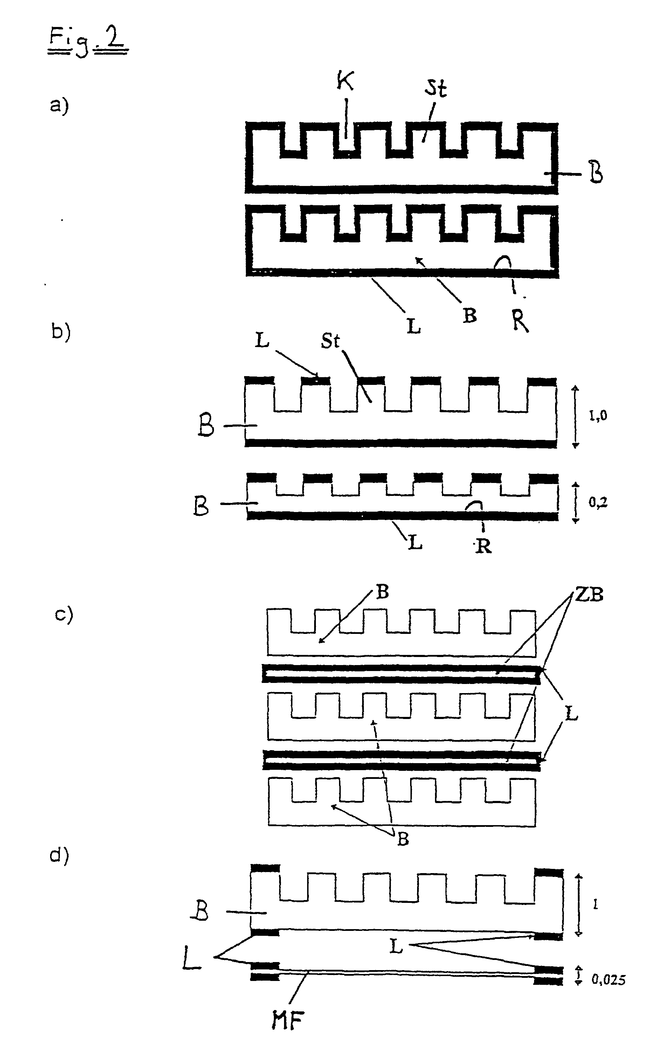

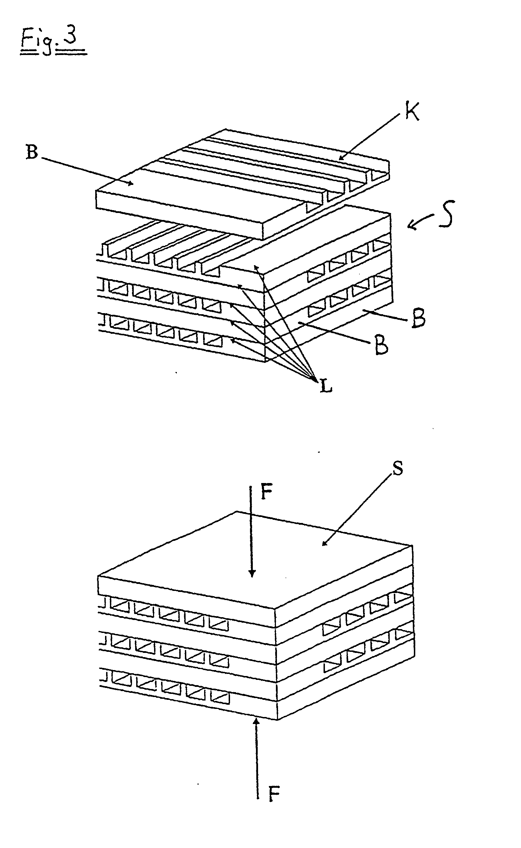

Die Fig. 2,3 zeigen beispielhaft einzelne Verfahrensschritte des erfindungsgemäßen Verfahrens. Dabei wird im ersten Schritt (Fig. 2) das Lot **L** auf die zu fügenden Bleche **B** aufgebracht.
In der Ausführung nach a) wird die gesamte Oberfläche der beiden Bleche, also Stege **St**, Kanäle **K**, die unstrukturierte Rückseite **R** sowie die Seitenflächen mit Lot beschichtet. Dies kann vorteilhaft insbesondere durch an sich bekannte galvanische Beschichtungstechniken erreicht werden.
In der Ausführung b) werden nur die Stege **St** sowie die Rückseiten **R** der beiden Bleche mit Lot beschichtet. Dazu können z.B. entsprechend zugeschnittene Folien verwendet werden.
In der Ausführung c) ist jeweils zwischen zwei strukturierten Blechen **B** ein unstrukturiertes Blech **ZB** vorhanden. Dieses Blech **ZB** ist in dieser Ausführung beidseitig beschichtet. Es dient als Verbindungsblech zwischen den benachbarten strukturierten Blechen **B**.
In der Ausführung d) wird ähnlich wie in der zuvor beschriebenen Ausführung c) zwischen zwei strukturierten Blechen **B** (das zweite strukturierte Blech ist nicht dargestellt) eine dünne, unstrukturierte Metallfolie **MF** angeordnet. Hierbei wird das Lot nur an den Randbereichen von Blech **B** und Metallfolie **MF** aufgebracht. Die dünne Metallfolie **MF** kann als Membran, z.B. für die Wasserstoffabtrennung, eingesetzt werden.

In den Ausführungen b) und d) sind bespielhafte Bemaßungen (in mm) für die Dicke (ohne Lotschichten) der Bleche **B** und der Metallfolie **MF** angegeben.

Bei allen vier Ausführungen können die zu fügenden Bleche gleiche oder wechselweise unterschiedliche Dicken (z.B.: 0,025 und 1 mm) aufweisen und dabei strukturiert oder nicht strukturiert sein.

Im nächsten Schritt (Fig. 3, oben) erfolgt das Stapeln (Kassettieren) der mit Lot **L** beschichteten strukturierten Bleche **B**. Es ergibt sich ein Stapel **S**, bei dem jeweils zwischen benachbarten Blechen eine Lotschicht **L** vorhanden ist. In der dargestellten Ausführung werden die Bleche zum Beispiel so ausgerichtet, daß die Kanäle benachbarter Bleche rechtwinklig zueinander verlaufen.

In einer alternativen Ausführung des Verfahrens können abwechselnd unbeschichtete Bleche und Lotfolien, die vorher entsprechend zugeschnitten werden, aufeinandergeschichtet werden.

Typische Werte für Stapelhöhe und Anzahl der gestapelten Bleche sind:
Anzahl: bis zu 150 Bleche
Stapelhöhe: bis zu 100 mm.

Im dritten Schritt (Fig. 3, unten) erfolgt das Verlöten der Bleche in Vakuum oder in Inertatmosphäre zu einem Bauteil. Als Inertatmosphäre kann z.B. Argon, Stickstoff oder Wasserstoff verwendet werden. Durch Wärmezufuhr (bevorzugte Löttemperaturen: 720 bis 1280°C, insbesondere 1020 bis 1170°C) wird das Lot zum Schmelzen gebracht. Um den Abstand zwischen den zu fügenden Metalloberflächen in eine Größenordnung zu bringen, bei dem das vorhandene Lot für eine Verbindung der Bleche sicher ausreicht, wird der Stapel **S** gleichzeitig druckbeaufschlagt (angedeutet durch die Kräfte **F**).

### Bezugszeichenliste

- B: Blech
- ZB: Verbindungsblech
- Db: Durchbrechung
- K: Kanal
- St: Steg
- Ub: Unterbrechung im Verlauf eines Stegs St
- L: Lotschicht
- S: Stapel
- R: Rückseite
- MF: Metallfolie.

## Patentansprüche

1. Verfahren zum Löten von metallischen, mikrostrukturierten Blechen (B), mit folgenden Verfahrensschritten:
- Erzeugen eines Stapels (S) aus den vorgenannten Blechen (B) sowie Lotschichten (L), die jeweils zwischen zwei benachbarten Blechen (B) vorhanden sind, wobei die Schichtdicke der Lotschichten 3 bis 25 µm beträgt, und wobei an den Blechen Strömungskanäle sowie zusätzliche Lotauffangkanäle vorhanden sind;
- Verlöten des Stapels (S) in Vakuum oder in Inertatmosphäre unter Wärmeeintrag.

2. Verfahren nach Anspruch 1, **dadurch gekennzeichnet, dass** der Stapel (S) aus Blechen (B) und Lotschichten (L) derart erzeugt wird, dass die Bleche (B) mit der Lotschicht (L) beschichtet werden und die mit Lot beschichteten Bleche (B) danach gestapelt werden.

3. Verfahren nach Anspruch 2, **dadurch gekennzeichnet, dass** beim Beschichten der Bleche (B) das Lot als Folie oder Paste oder Pulver oder mittels galvanischer Verfahren auf die Bleche (B) aufgebracht wird.

4. Verfahren nach einem der Ansprüche 2 oder 3, **dadurch gekennzeichnet, dass** beim Beschichten der Bleche (B) die Lotschicht (L) mit im wesentlichen konstanter Schichtdicke aufgebracht wird.

5. Verfahren nach Anspruch 1, **dadurch gekennzeichnet, dass** der Stapel aus Blechen (B) und Lotschichten (L) derart erzeugt wird, dass die Lotschichten (L) beim Stapeln (S) zwischen die Bleche gelegt werden.

6. Verfahren nach einem der vorangehenden Ansprüche, **dadurch gekennzeichnet, dass** die Lotschichten (L) auf die strukturierten und/oder auf die nicht strukturierten Flächen (R) der Bleche oder auf Teilbereiche (St) dieser Flächen aufgebracht werden.

7. Verfahren nach einem der vorangehenden Ansprüche, **dadurch gekennzeichnet, dass** der Stapel (S) während des Verlötens zusammengepresst wird, so dass der Abstand benachbarter Bleche (13) im Stapel (S) kleiner als 10 µm ist.

8. Verfahren nach einem der vorangehenden Ansprüche, **dadurch gekennzeichnet, dass** mindestens eines der Bleche (B) nicht mikrostrukturiert ist und zwischen zwei mikrostrukturierten Blechen (13) als Verbindungsblech (ZB) oder Membran (MF angeordnet wird.

9. Verfahren nach einem der vorangehenden Ansprüche, **dadurch gekennzeichnet, dass** die Bleche (B) aus einem der folgenden Werkstoffe bestehen:
- Stähle, z.B. 1.4301, 1.4401, 1.4404, 1.4541, 1.4571,
- Ni, Ni-Legierungen,
- Pd, Pd-Legierungen,
- Cu, Cu-Legierungen.

10. Verfahren nach einem der vorangehenden Ansprüche, **dadurch gekennzeichnet, dass** die Lotschicht (L) aus einem der folgenden Materialien besteht:
- Cu und Cu-Legierungen, insbesondere
CuPd Kupfer-Palladium-Legierung mit 10 bis 22 Gew.%, bevorzugt 15 bis 20 Gew.% Palladiumanteil;
- Ni Legierungen, insbesondere
NiP Nickel-Phosphor-Legierung mit 7 bis 14 Gew.%, bevorzugt 9 bis 12 Gew.% Phosphoranteil
- Au und Au-Legierungen, insbesondere
AuNi Gold-Nickel-Legierung mit 10 bis 22 Gew.%, bevorzugt 15 bis 20 Gew.% Nickelanteil
- Ag und Ag-Legierungen, insbesondere
AgTi, Silber-Titan-Legierungen mit 2 bis 6 Gew.%, bevorzugt 3 bis 5 Gew.% Titananteil.

11. Verfahren nach einem der vorangehenden Ansprüche, **dadurch gekennzeichnet, dass** Teilbereiche der Bleche mit einem Mittel zur Verhinderung der Benetzung mit Lot vorbehandelt werden.

12. Verwendung des Verfahrens nach einem der vorgenannten Ansprüche zur Herstellung eines Mikroreaktors, Mikrowärmeübertragers, öl- oder katalytisch beheizten Verdampfers oder eines Membranmoduls zur H₂-Abtrennung.

13. Verwendung nach Anspruch 12, **dadurch gekennzeichnet, dass** die genannten Einheiten für Brennstoffzellensysteme mit integrierter Wasserstofferzeugung für mobile Anwendungen, z.B. an Bord eines Fahrzeugs, eingesetzt werden.

## Claims

1. Method for soldering metallic, micro-structured sheets (B) comprising the following method steps:
- generating a stack (S) from said sheets (B) as well as solder layers (L), which are provided between two respective adjacent sheets (B), wherein the layer thickness of the solder layers is 3 to 25 µm, and wherein flow channels as well as additional solder collecting channels are provided on the sheets,
- soldering the stack (S) in vacuum or in an inert atmosphere while supplying heat.

2. Method according to claim 1,
**characterized in that** the stack (S) of sheets (B) and solder layers (L) is generated in such a way that the sheets (B) are coated with the solder layer (L) and the sheets (B) coated with solder are stacked subsequent thereto.

3. Method according to claim 2,
**characterized in that** upon coating of the sheets (B) the solder is applied to the sheets (B) in form of a foil or paste or powder or by means of electroplating methods.

4. Method according to claim 2 or 3,
**characterized in that** upon coating of the sheets (B) the solder layer (L) is applied with an essentially constant layer thickness.

5. Method according to claim 1,
**characterized in that** the stack of sheets (B) and solder layers (L) is generated in such a way that the solder layers (L) are placed between the sheets during stacking (S).

6. Method according to any one of the preceding claims,
**characterized in that** the solder layers (L) are applied to the structured and/or non-structured areas (R) of the sheets or to partial regions (St) of said areas.

7. Method according to any one of the preceding claims,
**characterized in that** the stack (S) is compressed during soldering so that the spacing between adjacent sheets (13) in the stack (S) is less than 10 µm.

8. Method according to any one of the preceding claims,
**characterized in that** at least one of the sheets (B) is not micro-structured and is disposed between two micro-structured sheets (13) as a connecting sheet (ZB) or membrane (MF).

9. Method according to any one of the preceding claims,
**characterized in that** the sheets (B) consist of one of the following materials:
- steels, e.g. 1.4301, 1.4401, 1.4404, 1.4541, 1.4571,
- Ni, Ni alloys,
- Pd, Pd alloys,
- Cu, Cu alloys.

10. Method according to any one of the preceding claims,
**characterized in that** the solder layer (L) consists of one of the following materials:
- Cu and Cu alloys, especially
CuPd, copper-palladium alloy comprising 10 to 22 % by weight, preferably 15 to 20 % by weight of palladium;
- Ni alloys, especially
NiP, nickel-phosphorous alloy comprising 7 to 14 % by weight, preferably 9 to 12 % by weight of phosphorous,
- Au and Au alloys, especially
AuNi, gold-nickel alloy comprising 10 to 22 % by weight, preferably 15 to 20 % by weight of nickel;
- Ag and Ag alloys, especially
AgTi, silver-titanium alloys comprising 2 to 6 % by weight, preferably 3 to 5 % by weight of titanium.

11. Method according to any one of the preceding claims,
**characterized in that** partial regions of the sheets are previously treated with an agent for preventing wetting with solder.

12. Application of the method according to any one of the preceding claims for producing a micro-reactor, a micro-heat exchanger, an evaporator heated by oil or catalytically or a membrane module for H₂ separation.

13. Application according to claim 12,
**characterized in that** the said units are employed for fuel cell systems with integrated hydrogen generation for mobile applications, e.g. on board of a vehicle.

## Revendications

1. Méthode de brasage de tôles (B) métalliques comprenant des microstructures, intégrant les étapes de mise en oeuvre suivantes :
- réalisation d'une pile (S) à partir desdites tôles (B) et de couches (L) de métal d'apport de brasage, lesquelles couches sont placées chacune entre deux tôles (B) voisines, l'épaisseur des couches de métal d'apport de brasage variant de 3 à 25 µm, et lesdites tôles présentant des canaux de circulation et des canaux supplémentaires destinés à la récupération du métal d'apport de brasage ;
- brasage de la pile (S) sous vide ou en atmosphère inerte, sous l'effet d'un apport de chaleur.

2. Méthode selon la revendication 1, **caractérisée en ce que** la pile (S) constituée à partir de tôles (B) et de couches (L) de métal d'apport de brasage est réalisée de sorte telle que les tôles (B) sont enduites d'une couche (L) de métal d'apport de brasage et que les tôles (B) enduites de métal d'apport de brasage sont ensuite empilées.

3. Méthode selon la revendication 2, **caractérisée en ce que**, lors de l'enduction des tôles (B), le métal d'apport de brasage est appliqué sous forme de feuille, de pâte ou de poudre ou à l'aide de procédés galvaniques sur les tôles (B).

4. Méthode selon l'une des revendications 2 ou 3, **caractérisée en ce que**, lors de l'enduction des tôles (B), la couche (L) de métal d'apport de brasage est appliquée selon une épaisseur pour l'essentiel constante.

5. Méthode selon la revendication 1, **caractérisée en ce que** la pile constituée à partir de tôles (B) et de couches (L) de métal d'apport de brasage est réalisée de sorte telle que les couches (L) de métal d'apport de brasage sont placées entre les tôles lors de l'empilement (S).

6. Méthode selon l'une des revendications précitées, **caractérisée en ce que** les couches (L) de métal d'apport de brasage sont appliquées sur les surfaces (R) structurées et/ou les surfaces (R) non structurées des tôles ou appliquées sur des zones partielles (St) desdites surfaces.

7. Méthode selon l'une des revendications précitées, **caractérisée en ce que** la pile (S) est comprimée pendant le brasage si bien que la distance entre les tôles (B) voisines dans la pile (S) est inférieure à 10 µm.

8. Méthode selon l'une des revendications précitées, **caractérisée en ce que** au moins une des tôles (B) ne comprend pas de microstructures et est disposée comme tôle de jonction (ZB) ou comme membrane (MF) entre deux tôles (B) comprenant des microstructures.

9. Méthode selon l'une des revendications précitées, **caractérisée en ce que** les tôles (B) sont réalisées à partir d'un des matériaux suivants :
- aciers, tels que 1.4301, 1.4401, 1.4404, 1.4541, 1.4571,
- Ni, alliages Ni,
- Pd, alliages Pd,
- Cu, alliages Cu.

10. Méthode selon l'une des revendications précitées, **caractérisée en ce que** la couche (L) de métal d'apport de brasage est réalisée à partir d'un des matériaux suivants :
- Cu et alliages Cu, en particulier
alliage Cu-Pd de cuivre et de palladium, la teneur en palladium variant de 10 à 22 % en poids, préférentiellement de 15 à 20 % en poids;
- alliages Ni, en particulier
alliage NiP de nickel et de phosphore, la teneur en phosphore variant de 7 à 14 % en poids, préférentiellement de 9 à 12 % en poids;
- Au et alliages Au, en particulier
alliage Au-Ni d'or et de nickel, la teneur en nickel variant de 10 à 22 % en poids, préférentiellement de 15 à 20 % en poids ;
- Ag et alliages Ag, en particulier
alliages Ag-Ti de titane et d'argent, la teneur en titane variant de 2 à 6 % en poids, préférentiellement de 3 à 5 % en poids.

11. Méthode selon l'une des revendications précitées, **caractérisée en ce que** des zones partielles des tôles sont préalablement traitées à l'aide d'un agent pour empêcher le mouillage avec du métal d'apport de brasage.

12. Utilisation de la méthode selon l'une des revendications précitées pour la fabrication d'un micro-réacteur, d'un micro-échangeur thermique, d'un évaporateur chauffé au fioul ou chauffé catalytiquement ou d'un module à membrane pour la séparation de l'hydrogène.

13. Utilisation selon la revendication 12, **caractérisée en ce que** les unités mentionnées sont utilisées dans des systèmes de piles à combustible avec production d'hydrogène intégrée et destinés à des applications mobiles, p.ex. à bord d'un véhicule.
